# EUROPÄISCHE PATENTSCHRIFT

(11) **EP 3 443 845 B1**
(45) Veröffentlichungstag und Bekanntmachung des Hinweises auf die Patenterteilung: **13.04.2022**
(21) Anmeldenummer: 18189219.1
(22) Anmeldetag: 16.08.2018
(51) Int. Cl.: A22C 17/00

(54) **FLEISCHSPIESS NACH DÖNER-ART UND VERFAHREN ZU SEINER HERSTELLUNG**
DÖNER-STYLE MEAT STICK AND METHOD FOR PRODUCING THE SAME
BROCHE POUR VIANDE DE TYPE À KEBAB ET SON PROCÉDÉ DE FABRICATION

(30) Priorität: 17.08.2017 DE 102017118748
(43) Veröffentlichungstag der Anmeldung: 20.02.2019
(73) Patentinhaber: Vogler, Hartmut, 16816 Neuruppin (DE)
(72) Erfinder: Vogler, Hartmut, 16816 Neuruppin (DE)
(74) Vertreter: ETL IP Patent- und Rechtsanwaltsgesellschaft mbH

(56) Entgegenhaltungen:
- EP-A1- 1 258 197
- WO-A1-03/047356
- DE-A1-102013 103 516
- DE-U1-202015 004 566
- GB-A- 2 381 730

## Beschreibung

Die Erfindung betrifft einen Fleischspieß nach Döner-Art, der Hackfleischlagen und zusammenhängende Zwischenlagen aufweist und ein Verfahren zu seiner Herstellung. Der Fleischspieß weist einen einen mittleren Spieß enthaltenen Zentralbereich auf, um den herum die Hackfleischlagen geschichtet sind.

Unter dem Begriff "Fleischspieß" ist der vor dem portionsweisen Verzehr auf einen vertikalen rotierenden Grillspieß gesteckte und zum Grillen von außen bestimmte, im wesentlichen aus Fleisch bestehende zylindrisch-konische Körper zu verstehen, der allgemein auch als "Döner" bzw. "Döner Kebab" oder "Drehspieß nach Döner-Art" bezeichnet wird.

Neben ausschließlich aus Fleischscheiben bestehenden Fleischspießen werden auch Fleischspieße verwendet, die überwiegend aus Hackfleisch gebildet sind. Auf diese bezieht sich die Erfindung. Dabei werden bisher um einen von einer Hülse umgebenen vertikalen Spieß portionsweise Hackfleischlagen geschichtet, die von Fleisch, meist aber überwiegend Fett enthaltenden Zwischenlagen getrennt sind. Sie bestehen meist aus Rinderseitenteilen, die in Scheiben geschnitten und auf die entsprechende Größe zugeschnitten werden. Die DE 10 2013 103 516 A1 schlägt als Zwischenlagen auch Geflügelfleischlappen, zum Beispiel aus Puten- oder Gänsefleisch, vor. Sie erhöhen den unerwünschten Fett- und Bindehautanteil des Fleischspießes und sind als Fettschichten auch von außen erkennbar. Das Zuschneiden und Vorbereiten der Zwischenlagen macht einen großen Anteil des Fertigungsaufwandes für den Fleischspieß aus. Fleischspieße und deren Herstellung sind ferner beispielsweise in DE 20 2015 004566 U1, EP 1 258 197 A1 und GB 2 381 730 A offenbart.

Aufgabe der Erfindung ist es, eine Stabilisierung eines aus Hackfleischlagen aufgebauten Fleischspießes auf eine besonders einfache und im Endprodukt wenig störende Weise zu erreichen und ein Verfahren dazu zu schaffen.

Diese Aufgabe wird erfindungsgemäß bei einem Fleischspieß der eingangs erwähnten Art dadurch erreicht, dass die Zwischenlagen aus einem fleischlosen, essbaren, abbratfähigen, dünnen, den Fleischspieß stabilisierenden Material bestehen. Jeweils nach einer Hackfleischlage ist eine der Zwischenlagen auf den Spieß gesteckt.

Die Zwischenlagen können aus einem geschmacklich und optisch den Fleischspieß nicht störenden Material beliebiger organischer und lebensmittel-geeigneter Provenienz bestehen, zum Beispiel aus Kollagen. Der hier verwendete Begriff "fleischlos" bedeutet im Zusammenhang mit der Erfindung ein Material, das zwar, wie zum Beispiel Kollagen, das ein wesentlicher organischer Bestandteil des Bindegewebes und damit ein tierisches Produkt ist, durchaus tierischer Herkunft sein kann, aber nicht in der Form verwendet wird, die es im tierischen Körper hatte. Die Zwischenlagen können z.B. auch aus pflanzlichen Grundstoffen vom Reis bis zu Algen gebildet und hergestellt werden, solange sie die erfindungsgemäße Definition erfüllen.

Die Zwischenlagen sind vorgefertigt und blattförmig und sollten bei ihrer Aufbringung auf die Hackfleischlagen, aber bevorzugt auch im feuchten und gefrorenen Zustand reißfest sein, natürlich aber auch essbar. Die Zwischenlagen bilden eine Stabilisierung des meist umgekehrt birnenförmigen Fleischspieß-Körpers und halten die wenig formstabilen Hackfleischlagen zusammen. Dabei sind sie vom Äußeren des Fleischspießes kaum sichtbar und sind auch sonst beim Abschneiden oder Abschälen der Dönerportionen in diesem kaum zu bemerken. Die Dicke der Zwischenlagen kann zwischen 0,02 und 0,2 mm, bevorzugt zwischen 0,03 und 0,05 mm betragen und ist damit um eine Größenordnung unter der Dicke der bisherigen Zwischenlagen. Diese Dimensionen können sich allerdings je nach dem verwendeten Material ändern. Nach dem Bratvorgang können sie eine den Hackfleischlagen angepasste Färbung aufweisen, beispielsweise eine Bräunung. Auch eine entsprechende Grundfarbe wäre möglich.

Ihre Stabilisierungsfunktion üben sie auch dann aus, wenn die Zwischenlagen nicht ganz bis zum Außendurchmesser des Fleischspießes reichen, also im Durchmesser kleiner sind als der sich über die Höhe des Fleischspießes ändernde Solldurchmesser. Ein erheblicher Vorteil ist, dass die Zwischenlagen bezüglich ihrer Form, ihres Außendurchmessers und mit einem Mittelloch vorgefertigt sein können. Bei der Herstellung des Fleischspießes entfallen dadurch die Arbeitsgänge der aufwändigen Vorbereitung bisheriger Zwischenlagen. So könnten beispielsweise für jede Fleischspießgröße bereits in den unterschiedlichen Durchmessern vorsortierte Päckchen von Zwischenlagen vorbereitet sein, die nur noch der Reihe nach nach jeder gewichtsmäßig abgemessenen Hackfleischlage aufgesteckt werden müssen.

Der Unauffälligkeit der Zwischenlagen trotz ausreichender Stabilisierungsfunktion dient es auch, wenn die Zwischenlagen an ihrem Außenumfang gewellt, gezahnt oder sternförmig sind. Es dient auch ihrer Stabilisierungsfunktion, wenn die Zwischenlagen eine strukturierte Oberfläche haben, also rauh sind oder Noppen oder Rippen aufweisen. Insbesondere bei großen Fleischspießen kann es auch sinnvoll sein, dass die Zwischenlagen Durchbrüche in ihrer Fläche haben, damit sich die Hackfleischlagen auf beiden Seiten der Zwischenlagen direkt miteinander verbinden können. Die Zwischenlage könnte auch eine Netz- oder Gitterstruktur haben.

Das mit der Erfindung zur Lösung der vorher genannten Aufgabe vorgeschlagene Verfahren zur Herstellung eines Fleischspießes, bei dem um einen einen Mittelspieß enthaltenden Zentralbereich herum Hackfleischlagen geschichtet werden, zeichnet sich dadurch aus, dass jeweils nach einer Hackfleischlage eine vorgefertigte blattförmige Zwischenlage auf den Spieß bzw. eine diesen umgebenden röhrenförmige Hülse gesteckt wird. Das geht schneller und ist von der Stabilisierungsfunktion zuverlässiger als bei der herkömmlichen Verfahrensweise und spart vor allem die aufwändige Vorbereitung von Zwischenlagen aus Rinder-Seitenteilen oder ähnlichen Teilen des tierischen Körpers.

Die vorstehenden und weitere Einzelheiten gehen auch aus der Beschreibung und den Zeichnungen hervor.

Ausführungsbeispiele der Erfindung sind in der Zeichnung schematisch dargestellt und werden im Folgenden näher erläutert. Es zeigen:
- Fig. 1: eine stark schematisierte, teilweise geschnitten dargestellte Seitenansicht eines Fleischspießes nach seiner Herstellung,
- Fig. 2: einen Schnitt durch ein Detail aus Fig.1 und
- Fig. 3 bis 6: schematische Draufsichten auf Zwischenlagen.

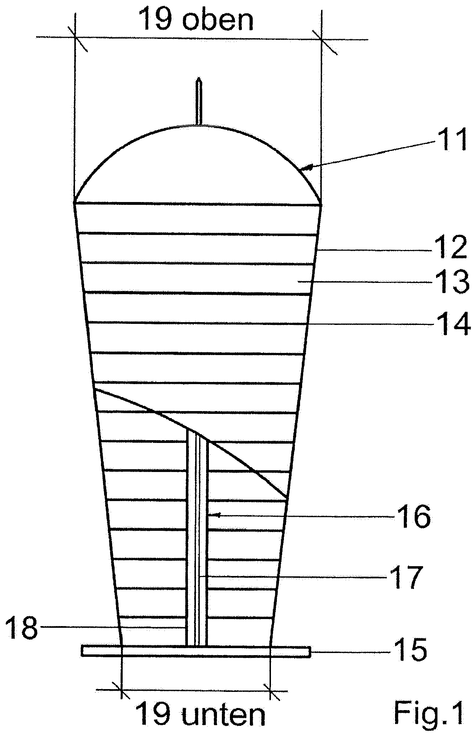

Fig.1 zeigt einen Fleischspieß 11 nach Dönerart. Er hat einen Körper 12, der eine umgekehrte birnenförmige Gestalt hat, mit einem dickeren Oberteil und nach unten konisch oder geschwungen sich verjüngendem Unterteil. Der Fleischspieß 11 besteht überwiegend aus Hackfleischlagen 13, zwischen denen Zwischenlagen 14 verlaufen. Die Fleischspieße werden in verschiedenen Größen, zum Beispiel zwischen 10 kg und 100 kg hergestellt. Das Hackfleisch ist zerkleinertes frisches oder tiefgefrorenes Fleisch, meist Rindfleisch/Kalbfleisch. Es wird mit Gewürzen und weiteren Zutaten versetzt und in einem Mischer vergleichmäßigt.

Der Fleischspieß 11 ist am Ende seiner Herstellungsphase dargestellt. Die einzelnen Lagen 13,14 werden, beginnend auf der Oberfläche eines Tellers 15 um einen Zentralbereich 16 aufgeschichtet. Der Zentralbereich 16 weist einen vom Teller vertikal aufrecht stehenden Spieß 17 und eine Hülse 18 auf, meist eine mit Aluminiumfolie bekleidete Papphülse. Sie bleibt in dem Fleischspieß 11 und erlaubt es nach Fertigstellung des Fleischspießes diesen von dem Spieß 17 abzuziehen und später auch auf den Spieß eines Dönergrills aufzustecken. Die Hackfleischlagen 13 haben, je nach Größe des Fleischspießes, Lagendicken von 10 bis 50 mm, vorzugsweise 20 bis 30 mm.

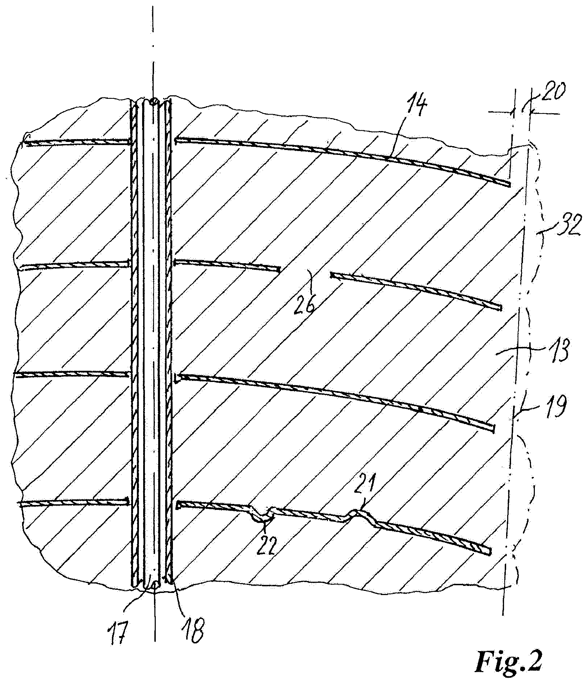

Fig. 2 zeigt ein Detail einen vertikalen mittleren Schnitt durch den Fleischspieß 11. Die Zwischenlagen 14 sind sehr dünn, jedoch in der Zeichnung stark verdickt dargestellt. Die Dicke liegt zwischen 0,02 bis 0,2 mm. Bewährt hat sich eine Kollagen-Folie von ca. 0,04 mm Dicke. Sie ist, ähnlich einer Wursthaut, essbar und lebensmittel-unbedenklich, hat aber so viel Reißfestigkeit, dass sie die einzelnen Hackfleischlagen stabilisiert und an dem Zentralbereich 16 festhält. Sie ist flexibel und passt sich der unter dem Gewicht der Hackfleischlagen zum Rand hin leicht nach unten gewölbten Form an.

Aus Fig. 2 ist auch zu erkennen, dass die Zwischenlagen 14 nicht ganz bis an den Soll-Außendurchmesser 19 des Fleischspießes 11 heranreichen, sondern einen Randabstand 20 davon haben. Damit sind die Zwischenlagen 14 am fertigen Fleischspieß 11 von außen nicht zu sehen und tragen wegen ihrer geringen Dicke auch nicht zum Gesamtvolumen bei. Der Fleischspieß ist also nahezu vollständig aus dem Hackfleisch gebildet. Ferner ist zu erkennen, dass die Zwischenlagen 14 teilweise Durchbrüche 26 haben, durch die die einzelnen Hackfleischlagen hindurch miteinander Verbindung schaffen und sich somit auch noch besser stabilisieren. Ferner tragen, wenn die Zwischenlage 14 ausreichende Formstabilität aufweist, Rippen 21 und Noppen 22 an den Zwischenlagen 14 dazu bei, dass die Hackfleischlagen 13 auf den Zwischenlagen 14 stabil zu liegen kommen und nicht nach außen abrutschen.

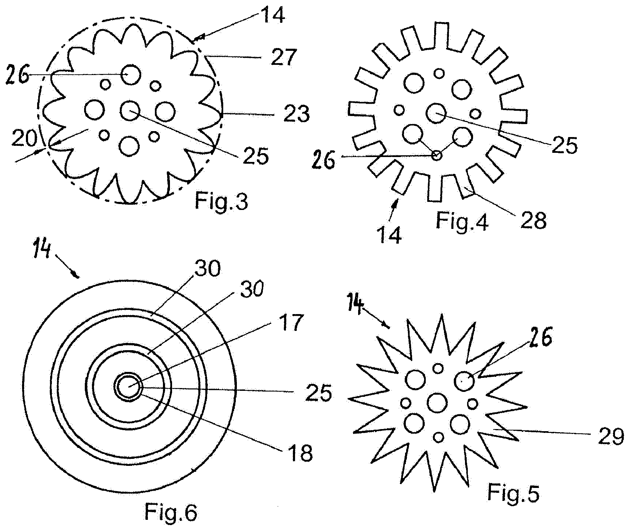

Fig.3 zeigt die Draufsicht auf eine Zwischenlage 14. Sie hat einen gewellten Außenumfang, der also von zahlreichen bogenförmigen Vorsprüngen 23 gebildet wird. Um ein für das Aufstecken auf den Zentralbereich 16 vorgesehenes Mittelloch 25 herum sind einige unterschiedlich große Durchbrüche 26 vorgesehen. Die strichlierte Linie 27 deutet den Soll-Außenumfang des Fleischspießes 11 an. Auch hier ist also ein gewisser Randabstand 20 eingehalten, so dass die Zwischenlagen 14 am fertigen Fleischspieß nicht zu sehen ist.

Ähnlich ist der Aufbau der Zwischenlagen 14 nach Fig. 4. Dort ist der Au-ßenumfang gezahnt, hat also im Wesentlichen rechteckige Vorsprünge 28 (Form: Zahnrad). Besonders sinnvoll ist die Form, die in Fig. 5 dargestellt ist. Die Form ist die eines vielstrahligen Sterns mit nach außen weisenden Spitzen 29 (Form: Stern oder Sonne). Sie bietet eine optimale Stabilisierung mit geringstmöglichem Anteil an Zwischenlage-Material. Die gezeigten Durchbrüche 26 können auch Noppen sein oder mit diesen abwechseln.

Fig. 6 zeigt eine kreisrunde Zwischenlage 14, die auf den Spieß 17 und die Hülse 18 aufgesteckt ist. Ihr Mittelloch 25, das meist 25mm Durchmesser hat, ist konzentrisch von Rippen 30 umgeben, die nach oben und/oder unten in dem Material der Zwischenlage 14 ausgeprägt sind.

Bei der Herstellung wird wie folgt verfahren: Auf die aus dem Teller 15 und dem Spieß 17 bestehende Vorrichtung wird die Hülse 18 gesteckt. Portioniert vorbereitete und zugeführte Hackfleischmasse wird um die Hülse herum angeordnet. Danach wird jeweils eine Zwischenlage 14 aufgesteckt und danach die nächste Hackfleischlage darauf angeordnet. Entsprechend der gewünschten Form des Fleischspießes, der sich nach unten verjüngt bzw. nach oben verdickt, können die Zwischenlagen in ihrem Durchmesser angepasst sein, ebenso für unterschiedliche Fleischspießgrößen. Sinnvoll ist es, jeder Fleischspießgröße ein Paket oder Stapel von Zwischenlagen 14 zuzuordnen, die nach den sich über die Höhe des Fleischspießes ändernden Durchmessern sortiert sind. Die in den Fig. 3 bis 5 gezeigten unterbrochenen Außenumfänge erleichtern das Ergreifen der Zwischenlagen.

Nach der Fertigstellung des Fleischspießes 11 wird dieser von der Vorrichtung 15,17 einschließlich der Hülse 18 abgezogen und auf einer Waage sowohl bezüglich seiner Außenform als auch des Sollgewichts zugeschnitten. Es wird also der Überstand 32 von Hackfleischmasse (siehe Fig. 2) entfernt und wieder in den Produktionsprozess eingegliedert. Danach wird der Fleischspieß 11 verpackt und für die Auslieferung schocktiefgefroren.

Es ist also zu erkennen, dass der Fleischspieß nach der Erfindung mit seinen zwar stabilisierenden, aber kaum Volumen einnehmenden Zwischenlagen, die weder optisch noch geschmacklich stören, auch einen erheblichen Vorteil in der Produktions-Effektivität bringt.

### Bezugszeichenliste

| | |
|---|---|
| Fleischspieß | 11 |
| Körper | 12 |
| Hackfleischlagen | 13 |
| Zwischenlagen | 14 |
| Teller | 15 |
| Zentral bereich | 16 |
| Spieß | 17 |
| Hülse | 18 |
| Soll-Außendurchmesser | 19 |
| Randabstand | 20 |
| Rippen | 21 |
| Noppen | 22 |
| Vorsprünge | 23 |
| Mittelloch | 25 |
| Durchbrüche | 26 |
| strichlierte Linie | 27 |
| Vorsprünge | 28 |
| Spitzen | 29 |
| Rippen | 30 |
| Überstand | 32 |

## Patentansprüche

1. Fleischspieß nach Döner-Art, der Hackfleischlagen (13) und zusammenhängende Zwischenlagen (14) aufweist, wobei die Zwischenlagen (14) vorgefertigt und blattförmig sind und aus einem fleischlosen, essbaren, abbratfähigen, dünnen, den Fleischspieß (11) stabilisierenden Material bestehen, und wobei der Fleischspieß einen einen mittleren Spieß (17) enthaltenen Zentralbereich aufweist, um den herum die Hackfleischlagen (13) geschichtet sind, **dadurch gekennzeichnet, dass** jeweils nach einer Hackfleischlage (13) eine der Zwischenlagen (14) auf den Spieß (17) gesteckt ist.

2. Fleischspieß nach Anspruch 1, **dadurch gekennzeichnet, dass** die Zwischenlagen (14) zumindest bei ihrer Aufbringung auf die Hackfleischlagen (13) reißfest sowie folien- oder blattförmig sind.

3. Fleischspieß nach Anspruch 1 oder 2, **dadurch gekennzeichnet, dass** die Zwischenlagen (14) eine Dicke von 0,02 bis 0,2 mm, vorzugsweise 0,03 bis 0,05 mm haben.

4. Fleischspieß nach einem der vorhergehenden Ansprüche, **dadurch gekennzeichnet, dass** die Zwischenlagen (14) bezüglich ihrer Form, ihrer Struktur, ihres Außendurchmessers und mit einem Mittelloch (25) vorgefertigt sind.

5. Fleischspieß nach einem der vorhergehenden Ansprüche, **dadurch gekennzeichnet, dass** die Zwischenlagen (14) im Durchmesser geringfügig kleiner als der Solldurchmesser (19) des Fleischspießes (11) an dessen entsprechender Stelle sind.

6. Fleischspieß nach einem der vorhergehenden Ansprüche, **dadurch gekennzeichnet, dass** die Zwischenlagen (14) unterschiedliche, der sich über die Höhe des Fleischspießes (11) ändernden Außenform des Fleischspießes angepasste Durchmesser haben.

7. Fleischspieß nach einem der vorhergehenden Ansprüche, **dadurch gekennzeichnet, dass** die Zwischenlagen (14) wenigstens eine von folgenden Außenformen aufweisen:
7.1 gewellt,
7.2 gezahnt,
7.3 sternförmig,
7.4 kreisrund.

8. Fleischspieß nach einem der vorhergehenden Ansprüche, **dadurch gekennzeichnet, dass** die Zwischenlagen (14) eine durch Noppen (22) oder Rippen (21,30) strukturierte Fläche haben.

9. Fleischspieß nach einem der vorhergehenden Ansprüche, **dadurch gekennzeichnet, dass** die Zwischenlagen (14) Durchbrüche (26) in ihrer Fläche haben.

10. Fleischspieß nach einem der vorhergehenden Ansprüche, **dadurch gekennzeichnet, dass** die Zwischenlage (14) eine Netz- oder Gitterstruktur hat.

11. Fleischspieß nach einem der vorhergehenden Ansprüche, **dadurch gekennzeichnet, dass** die Zwischenlage (14) vorwiegend aus Kollagen besteht.

12. Fleischspieß nach einem der vorhergehenden Ansprüche, **dadurch gekennzeichnet, dass** die Zwischenlage (14) zumindest nach dem Bratvorgang eine den Hackfleischlagen (13) angepasste Färbung aufweist.

13. Verfahren zur Herstellung eines Fleischspießes (11) nach einem der vorhergehenden Ansprüche, wobei um einen einen mittleren Spieß (17) enthaltenen Zentralbereich (16) herum Hackfleischlagen (13) geschichtet werden, **dadurch gekennzeichnet, dass** jeweils nach einer Hackfleischlage (13) eine vorgefertigte blattförmige Zwischenlage (14) auf den Spieß (17) gesteckt wird.

14. Verfahren nach Anspruch 13, **dadurch gekennzeichnet, dass** die aufgesteckten Zwischenlagen (14) in ihrem Durchmesser dem sich über die Höhe des Fleischspießes (11) ändernden Durchmesser des Fleischspießes angepasst ausgewählt und ggf. vorsortiert werden.

## Claims

1. Doner-style meat spit, with minced meat layers (13) and contiguous intermediate layers (14), wherein the intermediate layers (14) are preformed and sheet-like, and consist of a meatless, edible, fully cookable, thin material which stabilizes the meat spit (11), and wherein the meat spit has a central area which contains a middle spit (17), around which the minced meat layers (13) are arranged in layers, **characterized in that** one of the intermediate layers (14) is arranged on the spit (17) after each minced meat layer (13).

2. Meat spit according to Claim 1, **characterized in that** at least when they are applied to the minced meat layers (13) the intermediate layers (14) are tear-resistant and have the form of a film or sheet.

3. Meat spit according to Claim 1 or 2, **characterized in that** the intermediate layers (14) have a thickness from 0.02 to 0.2 mm, preferably 0.03 to 0.05 mm.

4. Meat spit according to any one of the preceding claims, **characterized in that** the intermediate layers (14) are pre-prepared with respect to their shape, structure, outer diameter and with a central hole (25).

5. Meat spit according to any one of the preceding claims, **characterized in that** the diameter of the intermediate layers (14) is slightly smaller than the nominal diameter (19) of the meat spit (11) at the corresponding point thereof.

6. Meat spit according to any one of the preceding claims, **characterized in that** the intermediate layers (14) have different diameters which vary according to the outer shape of the meat spit over the height of the meat spit (11).

7. Meat spit according to any one of the preceding claims, **characterized in that** the intermediate layers (14) have at least one of the following outer shapes:
7.1 corrugated,
7.2 serrated,
7.3 stellate,
7.4 circular.

8. Meat spit according to any one of the preceding claims, **characterized in that** the intermediate layers (14) have a surface structured by nubs (22) or ridges (21, 30).

9. Meat spit according to any one of the preceding claims, **characterized in that** the intermediate layers (14) have perforations (26) in their surface.

10. Meat spit according to any one of the preceding claims, **characterized in that** the intermediate layer (14) has a mesh or grid structure.

11. Meat spit according to any one of the preceding claims, **characterized in that** the intermediate layer (14) consists predominantly of collagen.

12. Meat spit according to any one of the preceding claims, **characterized in that** at least after the frying process the intermediate layer (14) has a colouring which resembles that of the minced meat layers (13).

13. Method for producing a meat spit (11) according to any one of the preceding claims, wherein minced meat layers (13) are arranged in layers around a central area (16) containing a middle spit (17), **characterized in that** one pre-prepared, sheet-like intermediate layer (14) is placed on the spit (17) after each layer of minced meat (13).

14. Method according to Claim 13, **characterized in that** the intermediate layers (14) are selected and optionally presorted such that their diameters are adapted to match the changing diameter of the meat spit over the height of the meat spit (11).

## Revendications

1. Brochette de viande de type Döner, qui comporte des couches (13) de viande hachée et des couches (14) intermédiaires cohérentes, les couches (14) intermédiaires étant préconfectionnées et en forme de feuilles et étant constituées d'une matière comestible, enlevable, mince, exempte de viande, qui stabilise la brochette (11) de viande, et la brochette de viande comportant une zone centrale contenant une brochette (17) médiane, autour de laquelle les couches (13) de viande hachée sont stratifiées, **caractérisée en ce que** chaque fois après une couche (13) de viande hachée, l'une des couches (14) intermédiaires est enfilée sur la brochette (17).

2. Brochette de viande selon la revendication 1, **caractérisée en ce que** du moins, lors de leur application sur les couches (13) de viande hachée, les couches (14) intermédiaires sont indéchirables et se présentent en forme de films ou de feuilles.

3. Brochette de viande selon la revendication 1 ou 2, **caractérisée en ce que** les couches (14) intermédiaires sont d'une épaisseur de 0,02 à 0,2 mm, de préférence de 0,03 à 0,05 mm.

4. Brochette de viande selon l'une quelconque des revendications précédentes, **caractérisée en ce que** les couches (14) intermédiaires sont préconfectionnées au niveau de leur forme, de leur structure, de leur diamètre extérieur et avec un trou médian (25).

5. Brochette de viande selon l'une quelconque des revendications précédentes, **caractérisée en ce que** les couches (14) intermédiaires sont d'un diamètre légèrement inférieur au diamètre (19) de consigne de la brochette (11) de viande à son emplacement correspondant.

6. Brochette de viande selon l'une quelconque des revendications précédentes, **caractérisée en ce que** les couches (14) intermédiaires sont de différents diamètres, s'adaptant à la forme extérieure variable de la brochette de viande sur la hauteur de la brochette (11) de viande.

7. Brochette de viande selon l'une quelconque des revendications précédentes, **caractérisée en ce que** les couches (14) intermédiaires présentent au moins l'une des formes extérieures suivantes :
7.1 ondulée,
7.2 dentée,
7.3 en étoile,
7.4 circulaire.

8. Brochette de viande selon l'une quelconque des revendications précédentes, **caractérisée en ce que** les couches (14) intermédiaires ont une surface structurée par des tétons (22) ou des nervures (21, 30).

9. Brochette de viande selon l'une quelconque des revendications précédentes, **caractérisée en ce que** les couches (14) intermédiaires sont dotées d'ajours (26) dans leur surface.

10. Brochette de viande selon l'une quelconque des revendications précédentes, **caractérisée en ce que** la couche (14) intermédiaire est dotée d'une structure en réseau ou en grille.

11. Brochette de viande selon l'une quelconque des revendications précédentes, **caractérisée en ce que** la couche (14) intermédiaire est majoritairement constituée de collagène.

12. Brochette de viande selon l'une quelconque des revendications précédentes, **caractérisée en ce qu'**au moins après le processus de rôtissage, la couche (14) intermédiaire présente une coloration adaptée aux couches (13) de viande hachée.

13. Procédé, destiné à confectionner une brochette (11) de viande selon l'une quelconque des revendications précédentes, lors duquel l'on stratifie autour d'une zone centrale (16) contenant une brochette (17) médiane des couches (13) de viande hachée, **caractérisé en ce que** chaque fois après une couche (13) de viande hachée, l'on enfile sur la brochette (17) une couche (14) intermédiaire préconfectionnée en forme de feuille.

14. Procédé selon la revendication 13, **caractérisé en ce que** l'on sélectionne et le cas échéant, l'on trie préalablement par leur diamètre les couches (14) intermédiaires en adaptation au diamètre de la brochette de viande variant sur la hauteur de la brochette (11) de viande.
